# FASCICULE DE BREVET EUROPEEN

(11) **EP 3 198 462 B1**
(45) Date de publication et mention de la délivrance du brevet: **17.06.2020**
(21) Numéro de dépôt: 15775133.0
(22) Date de dépôt: 25.09.2015
(51) Int. Cl.: G06F 13/42, G06F 21/44

(54) **TRANSMISSION DE DONNEES SYNCHRONES PAR L'INTERMEDIAIRE D'UN BUS DE DONNEES SERIE, NOTAMMENT UN BUS SPI**
ÜBERTRAGUNG VON SYNCHRONEN DATEN ÜBER EINEN SERIELLEN DATENBUS, INSBESONDERE EINEN SPI-BUS
TRANSMISSION OF SYNCHRONOUS DATA VIA A SERIAL DATA BUS, IN PARTICULAR A SPI BUS

(30) Priorité: 26.09.2014 FR 1459147
(43) Date de publication de la demande: 02.08.2017
(73) Titulaire: Valeo Systemes Thermiques, 78320 Le Mesnil Saint Denis (FR)
(72) Inventeur: FRANCO, Ismaël, F-78340 Les Clayes-sous-Bois (FR)
(74) Mandataire: Tran, Chi-Hai
(86) Numéro de dépôt international: PCT/EP2015/072085
(87) Numéro de publication internationale: WO 2016/046361

(56) Documents cités:
- EP-A2- 1 011 240
- WO-A1-98/14850
- CN-A- 102 819 512
- CN-A- 103 685 275
- US-A- 5 303 227

## Description

La présente invention concerne de manière générale la transmission de données entre un module de communication maître et un module de communication esclave au travers d'un bus de données série.

Un domaine d'application particulièrement concerné, bien que non limitatif, est celui des véhicules automobiles. Les véhicules automobiles sont aujourd'hui équipés de nombreux systèmes électroniques, eux-mêmes intégrant des sous-systèmes. Les systèmes et sous-systèmes doivent en permanence échanger des données.

Aujourd'hui, les véhicules automobiles sont généralement équipés d'au moins un réseau CAN (initiales anglo-saxonnes mises pour Controller Area Network) permettant à plusieurs nœuds du réseau, typiquement des calculateurs, de se connecter à un même bus de communication pour échanger des messages entre eux. D'autres systèmes, en particulier les systèmes de chauffage et/ou climatisation, les systèmes de réglages de rétroviseurs électriques, les lève-vitres électriques..., utilisent une architecture de réseau LIN (initiales anglo-saxonnes mises pour Local Interconnect Network). Le bus de communication LIN est un bus relativement lent et petit, mais il est fiable et économique, notamment si on le compare au bus CAN. Le protocole de communication LIN s'appuie sur une configuration maître/esclave(s). Dans un système de chauffage et/ou de climatisation, par exemple, le nœud maître est constitué d'un module électronique de contrôle, par exemple au niveau d'un panneau de contrôle situé sur tableau de bord du véhicule, et les nœuds esclaves comportent notamment un moteur-pulseur aptes à entraîner un ventilateur, une pluralité d'actionneurs pour commander les déplacements de volets de distribution et de mixage d'air, un ou plusieurs capteurs constitués par des sondes de température et une ou plusieurs résistances de chauffage. Le module électronique de contrôle peut recevoir ainsi à sa demande des informations d'état en provenance des nœuds esclaves et transmet à ceux-ci des informations de commande afin de réaliser les fonctions souhaitées de ventilation, réglages de température d'habitacle, désembuage, dégivrage,... commandées à partir du panneau de contrôle. Une telle architecture de réseau LIN est en général utilisée comme sous-réseau d'un bus CAN (non représenté) auquel le module électronique de contrôle formant le nœud maître est connecté. Le protocole LIN est un protocole synchrone mais les envois de messages sont asynchrones.

Dans certaines applications dans lesquelles le niveau de sécurité fonctionnelle requis des systèmes électrique/électronique dans les véhicules automobiles est maximum (niveau ASIL D conformément à la norme ISO 26262), il peut être nécessaire néanmoins d'avoir une communication bidirectionnelle simultanée pour optimiser les temps de réponse. C'est le cas notamment dans des architectures pour lesquels deux calculateurs doivent se vérifier mutuellement par le biais d'une communication synchrone en full-duplex.

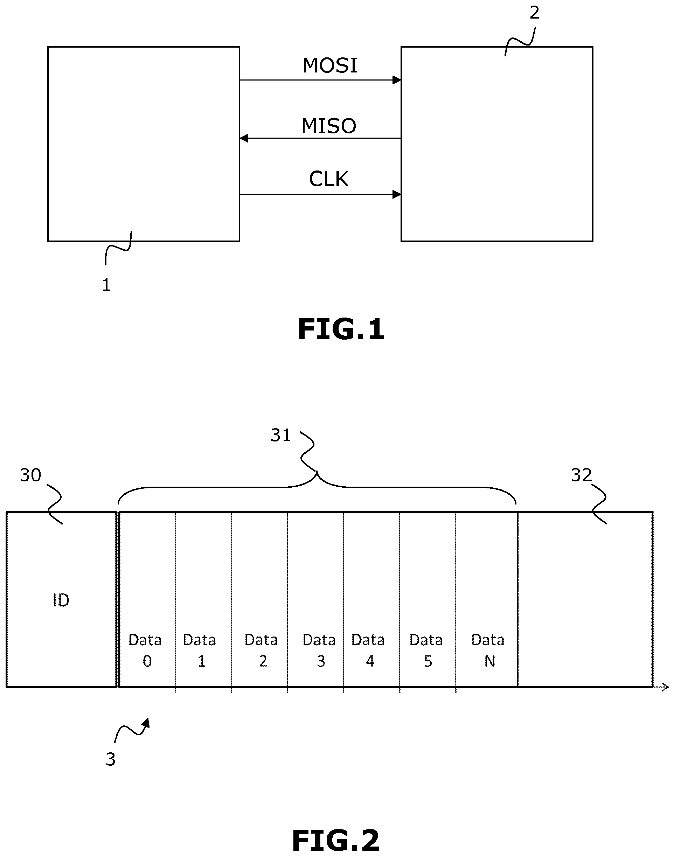

Une interface SPI (initiales anglo-saxonnes mises pour Serial Peripheral Interface) pourrait permettre un tel échange synchrone de messages. En effet, comme illustré schématiquement sur la figure 1, une interface SPI est une liaison série synchrone entre un calculateur maître 1 et un calculateur esclave 2 utilisant au minimum trois fils de connexion unidirectionnels pour véhiculer trois signaux logiques, à savoir :
- un signal MOSI (initiales anglo-saxonnes mises pour Master Output, Slave Input), généré par le calculateur maître 1 à destination du calculateur esclave 2 ;
- un signal MISO (initiales anglo-saxonnes mises pour Master Intput, Slave Output), généré par le calculateur esclave 2 à destination du calculateur maître 1 ; et
- un signal d'horloge CLK généré par le calculateur maître 1 et utilisé par les deux calculateurs 1, 2.

Néanmoins le protocole SPI est un protocole non orienté connexion, selon lequel le calculateur émetteur envoie des données sans prévenir le calculateur récepteur, et le calculateur récepteur reçoit des données sans envoyer d'accusé de réception. En outre, le protocole SPI ne propose aucun contrôle de l'intégrité des données, de sorte que le calculateur récepteur peut consommer des données endommagées. En conséquence, il n'est pas possible d'utiliser le protocole SPI connu à ce jour dans le cadre d'un contrôle mutuel du bon fonctionnement de deux calculateurs.

La présente invention a pour but de pallier les limitations précédentes.

Pour ce faire, l'invention a pour objet un procédé de transmission de données synchrones entre un module de communication maître et un module de communication esclave au travers d'un bus de données série, notamment un bus SPI, caractérisé en ce que les données à transmettre par chacun des deux modules de communication maître et esclave sont encapsulées dans un champ de données d'au moins une trame comprenant en outre un identifiant de trame, et en ce que deux trames sont échangées simultanément entre les deux modules de communication maître et esclave selon au moins un séquencement prédéterminé correspondant à un appairage unique des identifiants des deux trames échangées simultanément.

Selon d'autres particularités possibles du procédé selon l'invention :
- ce dernier comporte avantageusement une étape de vérification, au niveau de chacun des deux modules de communication maître et esclave, de l'intégrité de la transmission, à partir d'une extraction de l'identifiant d'une trame reçue et dudit au moins un séquencement prédéterminé ;
- l'identifiant de trame est par exemple codé sur un octet ;
- chaque trame de la pluralité de trames échangées comporte de préférence également un champ de contrôle comprenant des éléments binaires dépendant des données à transmettre, par exemple une somme de contrôle codée sur un octet, et le procédé comporte alors une étape de vérification, au niveau de chacun des deux modules de communication maître et esclave, de l'intégrité des données, à partir d'une extraction du contenu du champ de données et du champ de contrôle d'une trame reçue ;
- deux trames sont émises successivement par chacun des deux modules de communication maître et esclave en respectant de préférence au moins un délai inter trames prédéterminé ;
- l'étape de vérification de l'intégrité de la transmission peut alors comporter une étape de calcul, au niveau de chacun des deux modules de communication maître et esclave, du délai séparant deux trames successivement reçues, et de comparaison du délai calculé avec ledit au moins un délai inter trames prédéterminé ;
- le procédé peut comporter une étape d'interruption, pendant un délai d'interruption supérieur audit au moins un délai inter trames, de toute émission de trames à partir de l'un des deux modules de communication maître ou esclave, suite à toute erreur de communication détectée lors de l'étape de vérification de l'intégrité de la transmission ou de l'étape de vérification de l'intégrité des données ;
- il est préférable de prévoir qu'aucun échange de trames ne soit initié par le module de communication maître tant qu'un délai minimum d'attente prédéterminé n'est pas écoulé.

L'invention et ses différents aspects seront mieux compris au vu de la description suivante, faite en référence aux figures annexées, dans lesquelles :
- la figure 1, déjà décrite ci-avant, représente schématiquement une liaison SPI entre un calculateur maître et un calculateur esclave ;
- la figure 2 illustre la structure d'une trame de données selon un mode de réalisation possible de l'invention, pour l'échange de données synchrones entre les deux calculateurs de la figure 1 ;
- la figure 3 donne un exemple de deux séquences prédéterminées selon l'invention pour l'échange de trames entre les deux calculateurs ;
- la figure 4 représente un diagramme temporel avec un exemple d'échanges de trames de données au cours d'une communication entre les deux calculateurs ;
- les figures 5a et 5b représentent différentes étapes mises potentiellement en œuvre par le calculateur maître dans le cadre de la communication de la figure 4 ;
- les figures 6a et 6b représentent différentes étapes mises potentiellement en œuvre par le calculateur esclave dans le cadre de la communication de la figure 4.

On rappelle que le protocole SPI existant consiste uniquement en la transmission synchrone de données, à l'initiative d'un module de communication maître tel que le calculateur maître 1 de la figure 1, qui gère le signal d'horloge, et sélectionne le module de communication esclave, dans notre cas, le calculateur esclave 2 de la figure 1, avec lequel il veut communiquer. A chaque coup d'horloge, le calculateur maître 1 et le calculateur esclave 2 s'échangent un bit de données. Il est donc nécessaire de prévoir un cycle de huit coups d'horloge pour pouvoir transmettre, dans les deux sens, un octet. Le protocole SPI n'impose aucune autre règle.

La présente invention consiste en l'amélioration du protocole SPI existant sous forme de règles de communication qui vont permettre de détecter des erreurs de communication.

Selon une caractéristique essentielle de l'invention, les données sont encapsulées dans un champ de données d'au moins une trame comprenant en outre un identifiant de trame.

La figure 2 donne la structure préférée d'une trame 3 utilisée dans le cadre de l'invention avec :
- le champ d'entête comportant un identifiant 30 de trame, codé par exemple sur un octet ;
- le champ de données 31 comprenant un ou plusieurs octets.

La trame 3 comporte également de préférence un champ 32 de contrôle, par exemple également de la taille d'un octet, pour contenir des éléments binaires dépendant des données comprises dans le champ de données 31. Ces éléments de contrôle peuvent par exemple correspondre à une somme de contrôle.

Selon une autre caractéristique importante, une communication entre les deux modules maître 1 et esclave 2 consiste en au moins un échange simultané de deux trames selon au moins un séquencement prédéterminé correspondant à un appairage unique des identifiants des deux trames échangées simultanément.

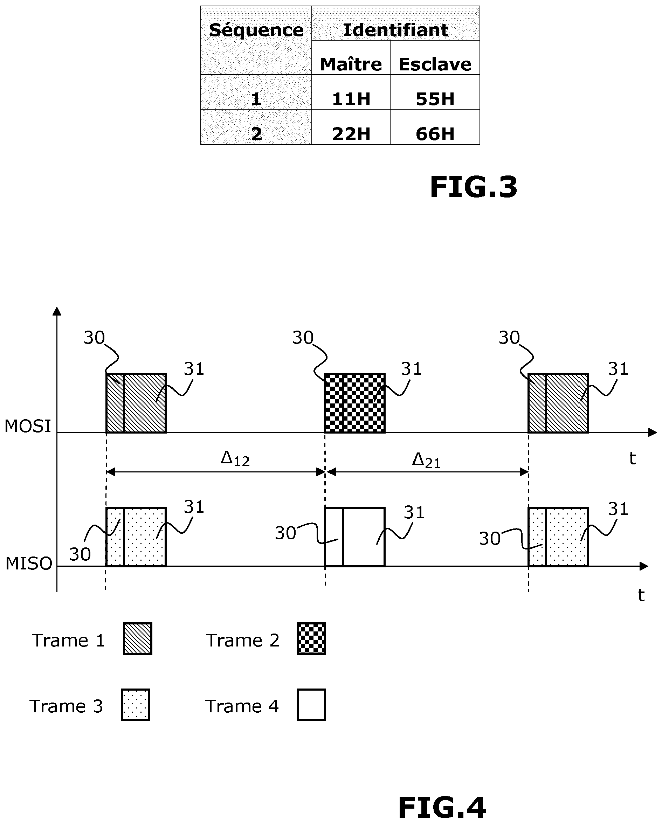

A titre d'exemple non limitatif, la figure 3 montre deux séquences possibles imposant les trames qui doivent être échangées simultanément :

Une première séquence correspond à l'émission, par le calculateur maître 1, d'une trame selon le format de la figure 3, pour laquelle le champ d'entête 30 contient l'identifiant 11H. Le calculateur esclave 2 doit alors simultanément émettre une trame dans laquelle le champ identifiant 30 contiendra l'identifiant 55H.

De façon analogue, une deuxième séquence correspond à l'émission, par le calculateur maître 1, d'une trame selon le format de la figure 3, pour laquelle le champ d'entête 30 contient l'identifiant 22H. Le calculateur esclave 2 doit alors simultanément émettre une trame dans laquelle le champ identifiant 30 contiendra l'identifiant 66H.

On entend ainsi par « Séquencement » le fait d'imposer aux calculateurs 1 et 2 d'émettre simultanément chacun une trame, les identifiants des deux trames émises simultanément étant appairés de façon unique.

Selon la taille des données à échanger, une même communication peut consister en un seul échange simultané de deux trames, appairées selon l'une quelconque des séquences prédéterminées, ou par une succession d'échanges simultanés de deux trames, appairées à chaque fois selon l'une ou l'autre des séquences prédéterminées. A titre d'exemple, la figure 4 montre le cas d'une communication entre un calculateur maître et un calculateur esclave nécessitant trois échanges, en particulier :
- un premier échange lors duquel le calculateur maître envoie une première trame, notée Trame 1, alors que le calculateur esclave envoie simultanément une trame, notée Trame 3 ;
- un deuxième échange lors duquel le calculateur maître envoie une deuxième trame, notée Trame 2, alors que le calculateur esclave envoie simultanément une trame, notée Trame 4 ;
- un troisième et dernier échange lors duquel le calculateur maître envoie à nouveau la Trame 1, et le calculateur esclave envoie simultanément à nouveau la Trame 3.

Dans cet exemple, la Trame 1 correspond par exemple à une trame dont l'identifiant dans le champ d'entête correspondant 30 est 11H. Compte tenu de l'appairage imposé selon la séquence 1 de la figure 3, la Trame 3 doit alors avoir comme identifiant dans son propre champ d'entête 30 la valeur 55H. La Trame 2 correspond quant à elle par exemple à une trame dont l'identifiant est 22H. Compte tenu de l'appairage imposé selon la séquence 2 de la figure 3, la Trame 4 doit alors avoir comme identifiant la valeur 66H. Bien entendu, les données comprises dans les champs de données 31 des deux Trame 1 ou des deux Trames 3 ne sont en général pas identiques.

Durant une communication nécessitant l'émission de plusieurs trames successives par chacun des calculateurs, deux trames sont émises successivement par chacun de ces calculateurs selon au moins un délai inter trames prédéterminé. Cela apparaît notamment dans l'exemple de la figure 4 qui montre :
- un premier délai Δ₁₂ correspondant à la période de temps s'écoulant entre le début de l'émission, par le module maître 1, de la première Trame 1 et de la Trame 2 ;
- un deuxième délai Δ₂₁, non nécessairement identique au premier délai Δ₁₂, ce deuxième délai Δ₂₁ correspondant à la période de temps s'écoulant entre le début de l'émission, par le module maître 1, de la Trame 2 et de deuxième Trame 1.

Ces délais sont de l'ordre de 10 ms et vont permettre avantageusement, comme cela apparaîtra dans la suite, de se prémunir d'une perte de communication ou d'une incohérence de communication entre le calculateur maître 1 et le calculateur esclave 2.

Le fait d'utiliser au moins un séquencement imposé pour l'échange simultané de trames va permettre de détecter une erreur de communication entre les calculateurs 1 et 2. En effet, chacun des calculateurs 1 et 2 est apte à vérifier l'intégrité de la transmission en vérifiant qu'une trame reçue a bien pour identifiant l'identifiant attendu imposé par le séquencement.

Lorsque plusieurs trames doivent être émises successivement au cours d'une communication, chacun des modules est en outre apte à vérifier l'intégrité de la communication en calculant le délai séparant la réception de deux trames, et vérifiant que ce délai correspond bien au délai inter trame prédéfini attendu. En particulier, si une trame est reçue avant le délai inter-trames, avec une marge fixée par exemple à -10%, chaque module pourra conclure à une incohérence dans la communication. Si une trame n'est pas reçue au bout du délai inter-trames, avec une marge fixée par exemple à + 10%, chaque module pourra conclure à une perte de la communication.

Enfin, dans le cas où les trames comportent en outre le champ 32 de contrôle, chaque calculateur 1 et 2 est en outre apte à vérifier l'intégrité des données reçues à partir d'une extraction du contenu du champ 31 de données et du champ 32 de contrôle.

Dès qu'une erreur de communication est détectée par l'un des calculateurs 1 ou 2, suite au non-respect du séquencement des trames, au non-respect du ou des délais inter trames ou, le cas échéant, d'un défaut d'intégrité des données, ce calculateur va de préférence interrompre sa propre émission pendant une durée d'interruption supérieure au délai d'inter trames. L'autre calculateur sera ainsi rapidement à son tour informé de l'occurrence d'une erreur.

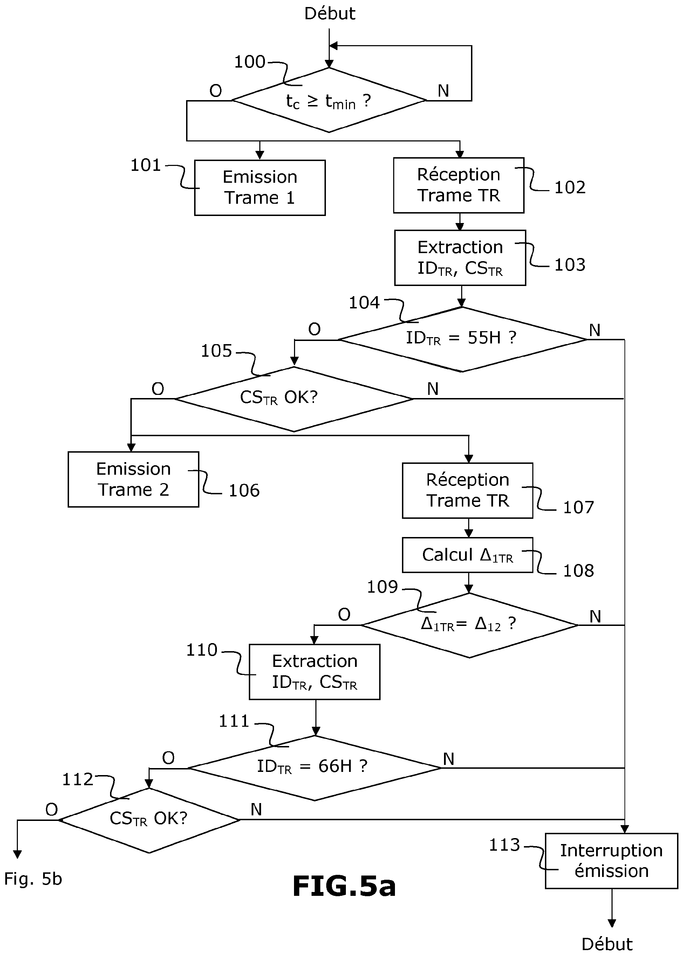

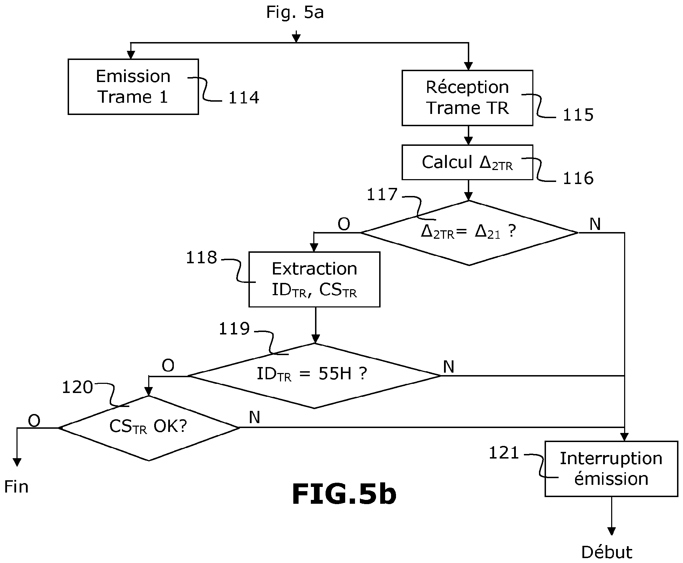

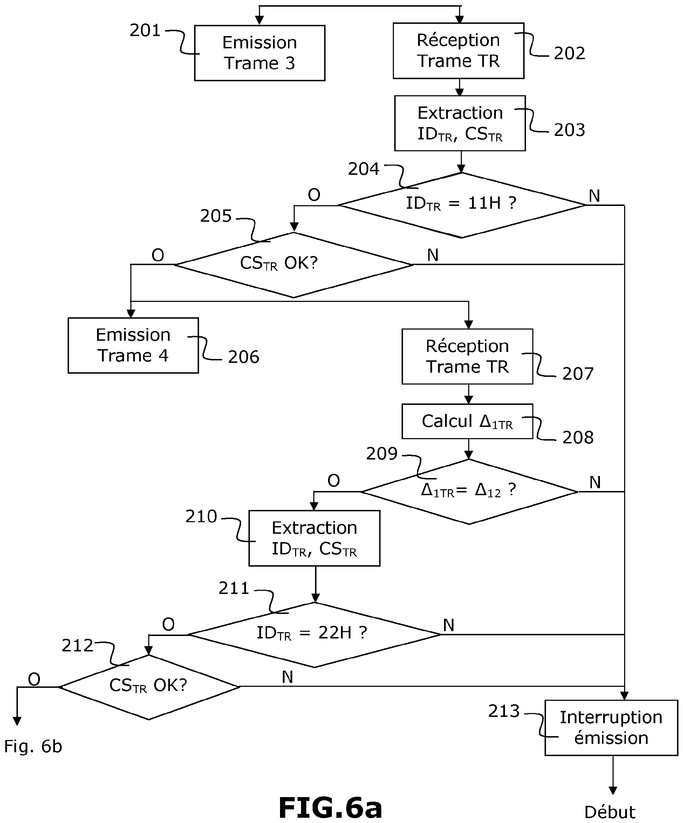

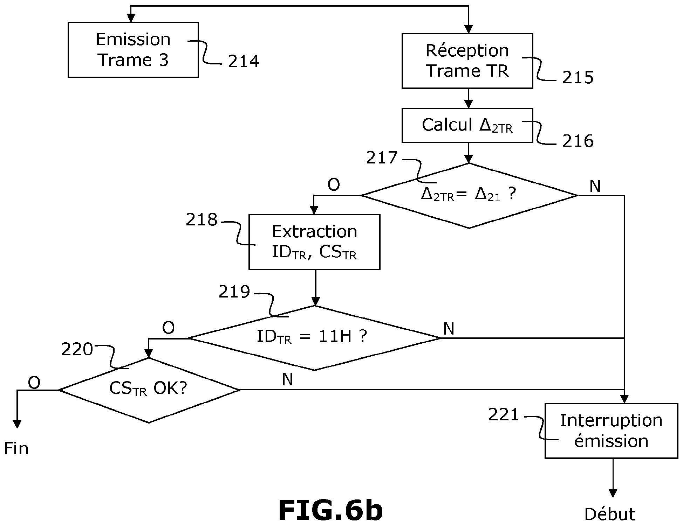

Pour fixer les idées, on a représenté sur les figures 5a et 5b toutes les étapes susceptibles d'être mises en œuvre par le calculateur maître 1, et sur les figures 6a et 6b toutes les étapes susceptibles d'être mises en œuvre par le calculateur esclave 2 dans le cadre de la communication selon le schéma de séquencements donné à titre d'exemple sur la figure 4 :

Du côté du calculateur maître 1, il est tout d'abord nécessaire d'initialiser la communication de manière à débuter correctement cette communication dès le premier échange. Pour ce faire, le calculateur maître 1 doit de préférence s'assurer qu'un délai minimum d'attente tₘᵢₙ soit écoulé avant l'émission de la première trame. Ce délai doit être supérieur au délai maximum d'initialisation du registre d'émission du calculateur esclave, afin de garantir que ce dernier sera en mesure d'émettre la Trame 3 simultanément à l'émission par le maître de la première Trame 1. Par exemple, si le délai maximum d'initialisation du registre émission est de l'ordre de 100 ms, on fixe le délai minimum d'attente tₘᵢₙ à environ 200 ms. Lors d'une étape d'initialisation 100, le module de communication maître 1 compare l'instant courant fourni par son horloge à tₘᵢₙ de manière à n'initier l'échange de trames que lorsque l'instant courant dépasse la valeur de tₘᵢₙ.

Le calculateur maître 1 émet alors la première Trame 1 (étape 101) et reçoit simultanément (étape 102) une trame que l'on note ici TR, qui correspond à la première trame émise par le calculateur esclave 2.

Lors d'une étape 103, le calculateur maître 1 extrait de la trame TR reçue les contenus des différents champs, notamment son identifiant ID_{TR} et le contenu CS_{TR} du champ de contrôle.

Le calculateur maître 1 peut alors :
- d'une part, vérifier que la trame reçue TR correspond bien à la Trame 3 attendue à partir de l'identifiant ID_{TR} et du séquencement 1, en d'autres termes, vérifier dans notre exemple que l'identifiant IDTR est bien égal à 55H (étape 104);
- d'autre part, vérifier l'intégrité des données reçues à partir du contenu CS_{TR} (étape 105).

Sur la figure 5a, les étapes 104 et 105 sont successives, mais leur ordre pourrait être interverti de façon équivalente.

Si l'un quelconque des tests menés aux étapes 104 et 105 est négatif, le calculateur maître 1 en déduit qu'une erreur de communication s'est produite, et interrompt toute émission pendant un délai supérieur au délai inter-trames Δ₁₂ (étape 113), par exemple de l'ordre d'une seconde.

Si au contraire les deux tests menés aux étapes 104 et 105 sont positifs, le calculateur maître 1 émet alors la deuxième trame, ici la Trame 2 (étape 106) et reçoit simultanément (étape 107) une trame que l'on note ici à nouveau TR, qui correspond à la deuxième trame émise par le calculateur esclave 2.

Lors d'une étape 108, le calculateur maître 1calcule le délai Δ_{1R} qui s'est écoulé entre les deux réceptions de trames, puis vérifie que ce délai correspond bien au délai inter-trame prédéfini, dans l'exemple au délai Δ₁₂ (étape 109).

Le cas échéant, le calculateur maître 1 réitère les étapes de vérification de l'intégrité de la transmission (étape 111) et de l'intégrité des données (étape 112). A noter ici que l'étape 111 consiste à vérifier que l'identifiant ID_{TR} de la trame reçue est bien égal à l'identifiant attendu, dans notre exemple à la valeur 66H.

Si l'un quelconque des tests menés aux étapes 109, 111 et 112 est négatif, le calculateur maître 1 en déduit qu'une erreur de communication s'est produite, et interrompt toute émission pendant un délai supérieur au délai inter-trames Δ₁₂ (étape 113), éventuellement augmenté d'une marge de sécurité de 10 %. Cela a pour effet de provoquer une détection de perte de communication du côté du calculateur esclave 2.

Dans le cas contraire, on réitère, comme illustré sur la figure 5b, un cycle d'étapes 114 à 120 similaire au cycle précédent d'étapes 106 à 112, avec cette fois-ci l'émission de la troisième trame, ici à nouveau la Trame 1, et la réception simultanée d'une trame TR. Une légère différence de traitement apparaît puisqu'il s'agit de vérifier dans ce nouveau cycle :
- que le délai écoulé Δ_{2TR} entre les deux dernières trames reçues, tel que calculé à l'étape 116 par le calculateur maître 1, correspond bien au deuxième délai inter-trame prédéfini, ici Δ₂₁ (étape 117), et
- que l'identifiant ID_{TR} de la trame reçue est bien égal à l'identifiant attendu pour la Trame 3, dans notre exemple à la valeur 55H (étape 119).

De nouveau, si l'un quelconque des tests menés aux étapes 117, 119 et 120 est négatif, le calculateur maître 1 en déduit qu'une erreur de communication s'est produite, et interrompt toute émission pendant un délai supérieur au délai inter-trames Δ₂₁ (étape 121), éventuellement augmenté d'une marge de sécurité de 10 %.

Les figures 6a et 6b illustrent les étapes de traitement correspondantes au niveau du calculateur esclave 2, très similaires à celles déjà décrites ci-dessus.

Ainsi, le premier cycle d'étapes 201 à 205 correspond au cycle d'étapes 101 à 105, à ceci près que :
- la trame émise par le calculateur esclave 2 à l'étape 201 est la Trame 3 ;
- il s'agit de vérifier ici que la trame TR reçue par le calculateur esclave à l'étape 202 correspond bien à la trame attendue, en l'occurrence la Trame 1, avec un identifiant de trame égal à 11H (étape 204).

De même, le deuxième cycle d'étapes 206 à 212 correspond au cycle d'étapes 106 à 112, à ceci près que :
- la trame émise par le calculateur esclave 2 à l'étape 203 est la Trame 4 ;
- il s'agit de vérifier ici que la trame TR reçue par le calculateur esclave à l'étape 207 correspond bien à la trame attendue, en l'occurrence la Trame 2, avec un identifiant de trame égal à 22H (étape 211).

Enfin, le troisième cycle d'étapes 214 à 220 de la figure 6b correspond au cycle d'étapes 114 à 120, à ceci près que :
- la trame émise par le calculateur esclave 2 à l'étape 214 est à nouveau la Trame 3 ;
- il s'agit de vérifier ici que la trame TR reçue par le calculateur esclave à l'étape 215 correspond bien à la trame attendue, en l'occurrence la Trame 1, avec un identifiant de trame égal à 11H (étape 219).

Si une quelconque erreur est détectée à différents stades des tests de vérification de l'intégrité de la communication ou de l'intégrité des données, le calculateur esclave 2 passe dans un mode dégradé en interrompant toute émission pendant un délai supérieur au délai inter-trames (étape 213 ou 221), éventuellement augmenté d'une marge de sécurité de 10 %. Cela a pour effet de provoquer une détection de perte de communication du côté du calculateur maître 1.

Pour sortir du mode dégradé, le calculateur maître 1 et le calculateur esclave 2 réamorcent la séquence d'initialisation de la communication, tant qu'un premier échange n'est pas réalisé.

Grâce au format imposé des trames, à l'appairage des trames émises en synchronisme, et le cas échant, à la périodicité des trames, on garantit la fiabilité de la communication même au travers d'une liaison SPI. Il devient possible alors d'utiliser une liaison SPI pour des applications automobiles pour lesquelles le niveau de sécurité fonctionnelle requis des systèmes électrique/électronique dans les véhicules automobiles serait élevé.

## Revendications

1. Procédé de transmission de données synchrones entre un module de communication maître (1) et un module de communication esclave (2) au travers d'un bus de données série, dans lequel les données à transmettre par chacun des deux modules de communication maître et esclave (1, 2) sont encapsulées dans un champ (31) de données d'au moins une trame (3) comprenant en outre un identifiant (30) de trame, et dans lequel deux trames sont échangées simultanément entre les deux modules de communication maître et esclave (1, 2) selon au moins un séquencement prédéterminé correspondant à un appairage unique des identifiants des deux trames échangées simultanément, **caractérisé en ce que** deux trames sont émises successivement par chacun des deux modules de communication maître et esclave (1, 2) en respectant au moins un délai inter trames prédéterminé.

2. Procédé selon la revendication 1, **caractérisé en ce qu'**il comporte une étape (104, 111, 119, 204, 211, 219) de vérification, au niveau de chacun des deux modules de communication maître et esclave (1, 2), de l'intégrité de la transmission, à partir d'une extraction de l'identifiant (30) d'une trame (3) reçue et dudit au moins un séquencement prédéterminé.

3. Procédé selon l'une quelconque des revendications précédentes, **caractérisé en ce que** chaque trame (3) échangée comporte en outre un champ (32) de contrôle comprenant des éléments binaires dépendant des données à transmettre, et **en ce qu'**il comporte une étape (105, 112, 120, 205, 212, 220) de vérification, au niveau de chacun des deux modules de communication maître et esclave (1, 2), de l'intégrité des données, à partir d'une extraction du contenu du champ (31) de données et du champ (32) de contrôle d'une trame reçue.

4. Procédé selon la revendication 3, **caractérisé en ce que** le champ de (32) contrôle comprend une somme de contrôle.

5. Procédé selon l'une quelconque des revendications 3 ou 4, **caractérisé en ce que** le champ (32) de contrôle est codé sur un octet.

6. Procédé selon la revendication 2, **caractérisé en ce que** ladite étape de vérification de l'intégrité de la transmission comporte en outre une étape de calcul (108, 116, 208, 216), au niveau de chacun des deux modules de communication maître et esclave (1, 2), du délai séparant deux trames successivement reçues, et de comparaison (109, 117, 209, 217) du délai calculé avec ledit au moins un délai inter trames prédéterminé.

7. Procédé selon la revendication 6, **caractérisé en ce qu'**il comporte une étape d'interruption (113, 121, 213, 221), pendant un délai d'interruption supérieur audit au moins un délai inter trames, de toute émission de trames à partir de l'un des deux modules de communication maître ou esclave, suite à toute erreur de communication détectée lors de l'étape de vérification de l'intégrité de la transmission ou de l'étape de vérification de l'intégrité des données.

8. Procédé selon l'une quelconque des revendications précédentes, **caractérisé en ce qu'**aucun échange de trames n'est initié par le module de communication maître (1) tant qu'un délai minimum d'attente prédéterminé n'est pas écoulé.

9. Procédé selon l'une quelconque des revendications précédentes, **caractérisé en ce que** l'identifiant (30) de trame est codé sur un octet.

## Patentansprüche

1. Verfahren zur Übertragung von synchronen Daten zwischen einem Master-Kommunikationsmodul (1) und einem Slave-Kommunikationsmodul (2) über einen seriellen Datenbus, bei dem die von jedem der beiden Master- und Slave-Kommunikationsmodule (1, 2) zu übertragenden Daten in ein Datenfeld (31) mindestens eines Frames (3) gekapselt werden, der ferner eine Frame-Kennung (30) umfasst, und bei dem zwischen den beiden Master- und Slave-Kommunikationsmodulen (1, 2) zwei Frames gleichzeitig gemäß mindestens einer vorbestimmten Taktung ausgetauscht werden, die einem einmaligen Pairing der Kennungen der beiden gleichzeitig ausgetauschten Frames entspricht, **dadurch gekennzeichnet, dass** von jedem der beiden Master- und Slave-Kommunikationsmodulen (1, 2) zwei Frames nacheinander unter Einhaltung mindestens einer vorbestimmten Zwischenframezeit gesendet werden.

2. Verfahren nach Anspruch 1, **dadurch gekennzeichnet, dass** es einen Schritt (104, 111, 119, 204, 211, 219) des Verifizierens, auf Ebene jedes der beiden Master- und Slave-Kommunikationsmodule (1, 2), der Integrität der Übertragung anhand einer Extraktion der Kennung (30) eines empfangenen Frames (3) und der mindestens einen vorbestimmten Taktung beinhaltet.

3. Verfahren nach einem der vorhergehenden Ansprüche, **dadurch gekennzeichnet, dass** jeder ausgetauschte Frame (3) ferner ein Prüffeld (32) beinhaltet, das binäre Elemente umfasst, die von den zu übertragenden Daten abhängen, und dass es einen Schritt (105, 112, 120, 205, 212, 220) des Verifizierens, auf Ebene jedes der beiden Master- und Slave-Kommunikationsmodule (1, 2), der Integrität der Daten anhand einer Extraktion des Inhalts des Datenfeldes (31) und des Prüffeldes (32) eines empfangenen Frames beinhaltet.

4. Verfahren nach Anspruch 3, **dadurch gekennzeichnet, dass** das Prüffeld (32) eine Prüfsumme umfasst.

5. Verfahren nach einem der Ansprüche 3 oder 4, **dadurch gekennzeichnet, dass** das Prüffeld (32) über ein Byte codiert ist.

6. Verfahren nach Anspruch 2, **dadurch gekennzeichnet, dass** der Schritt des Verifizierens der Integrität der Übertragung ferner einen Schritt des Berechnens (108, 116, 208, 216), auf Ebene jedes der beiden Master- und Slave-Kommunikationsmodule (1, 2), der zwei nacheinander empfangene Frames trennenden Zeit und des Vergleichens (109, 117, 209, 217) der berechneten Zeit mit der mindestens einen vorbestimmten Zwischenframezeit beinhaltet.

7. Verfahren nach Anspruch 6, **dadurch gekennzeichnet, dass** es einen Schritt des Unterbrechens (113, 121, 213, 221) jedes Sendens von Frames von einem der beiden Master- oder Slave-Kommunikationsmodule aus während einer Unterbrechungszeit, die länger als die mindestens eine Zwischenframezeit ist, nach jedem Kommunikationsfehler beinhaltet, der beim Schritt des Verifizierens der Integrität der Übertragung oder beim Schritt des Verifizierens der Integrität der Daten festgestellt wird.

8. Verfahren nach einem der vorhergehenden Ansprüche, **dadurch gekennzeichnet, dass** vom Master-Kommunikationsmodul (1) kein Frame-Austausch initiiert wird, solange eine vorbestimmte Mindestwartezeit nicht abgelaufen ist.

9. Verfahren nach einem der vorhergehenden Ansprüche, **dadurch gekennzeichnet, dass** die Frame-Kennung (30) über ein Byte codiert ist.

## Claims

1. Method for transmitting synchronous data between a master communication module (1) and a slave communication module (2) through a series data bus, wherein the data to be transmitted by each of the two master and slave communication modules (1, 2) are encapsulated in a data field (31) of at least one frame (3) furthermore comprising a frame identifier (30), and wherein two frames are exchanged simultaneously between the two master and slave communication modules (1, 2) in at least one predefined sequence corresponding to a unique pairing of the identifiers of the two simultaneously exchanged frames, **characterized in that** two frames are successively sent by each of the two master and slave communication modules (1, 2) while respecting at least one predefined inter-frame delay.

2. Method according to Claim 1, **characterized in that** it comprises a step (104, 111, 119, 204, 211, 219) of verifying, in each of the two master and slave communication modules (1, 2), the integrity of the transmission, on the basis of an extraction of the identifier (30) of a received frame (3) and of said at least one predefined sequence.

3. Method according to either one of the preceding claims, **characterized in that** each exchanged frame (3) furthermore comprises a control field (32) containing binary elements dependent on the data to be transmitted, and **in that** it comprises a step (105, 112, 120, 205, 212, 220) of verifying, in each of the two master and slave communication modules (1, 2), the integrity of the data, on the basis of an extraction of the content of the data field (31) and of the control field (32) of a received frame.

4. Method according to Claim 3, **characterized in that** the control field (32) comprises a control sum.

5. Method according to either one of Claims 3 and 4, **characterized in that** the control field (32) is coded on one octet.

6. Method according to Claim 2, **characterized in that** said step of verifying the integrity of the transmission furthermore comprises a step of computing (108, 116, 208, 216), in each of the two master and slave communication modules (1, 2), the delay separating two successively received frames, and of comparing (109, 117, 209, 217) the computed delay with said at least one predefined inter-frame delay.

7. Method according to Claim 6, **characterized in that** it comprises a step of interrupting (113, 121, 213, 221), for an interruption time longer than said at least one inter-frame delay, all sending of frames from one of the two master and slave communication modules, following any communication error detected **in that** the step of verifying the integrity of the transmission or the step of verifying the integrity of the data.

8. Method according to any one of the preceding claims, **characterized in that** no exchange of frames is initiated by the master communication module (1) provided that a predefined minimum waiting time has not passed.

9. Method according to any one of the preceding claims, **characterized in that** the frame identifier (30) is coded on one octet.
